Europäisches Patentamt

European Patent Office

Office européen des brevets

(11) Veröffentlichungsnummer: **0 496 250 A2**

# EUROPÄISCHE PATENTANMELDUNG

(21) Anmeldenummer: **92100484.2**

(22) Anmeldetag: **14.01.92**

(51) Int. Cl.5: **F23G 5/30**, F23L 15/04, F23G 5/16

(30) Priorität: **25.01.91 DE 4102168**

(43) Veröffentlichungstag der Anmeldung:
**29.07.92 Patentblatt 92/31**

(84) Benannte Vertragsstaaten:
**AT BE CH DE DK ES FR GB GR IT LI LU MC NL PT SE**

(71) Anmelder: **Alb. Klein GmbH & Co. KG**
**Postfach 27**
**W-5241 Niederfischbach(DE)**

(72) Erfinder: **Scheel, Hans-Joachim**
**Hahenseifen 45**
**W-5241 Niederfischbach(DE)**

(74) Vertreter: **Hiebsch, Gerhard F., Dipl.-Ing. et al**
**Hiebsch & Peege Patentanwälte Postfach**
**464 Erzbergerstrasse 5a**
**W-7700 Singen 1(DE)**

(54) **Verfahren und Vorrichtung zum Behandeln von Staub od. dgl. Rieselgut.**

(57) Bei einem Verfahren zum Behandeln von mit organischen Anteilen versehenem Staub od. dgl., insbesondere vom Filterstaub aus Binder enthaltenden Gießereisanden, wird der Staub in einen fluidisierbaren Wärmeträger aus feuerfestem Werkstoff eingebracht, aufgeheizt und verbrannt, wobei der Wärmeträger zur Aufnahme des Staubes bevorzugt vorgewärmt wird.

Bei einer Vorrichtung zur Durchführung dieses Verfahrens ist in einer Brennkammer eines Ofens (12) auf einem Fluidisierboden (30) ein Schüttgutbett aus einem fludisierbaren, feuerfesten Werkstoff als Wärmeträger (34) angeordnet, und in diesem sind eine Heizeinrichtung (36) sowie wenigstens eine Eintragseinrichtung (38) für den Staub vorgesehen.

Fig.1

Die Erfindung betrifft ein Verfahren zum Behandeln von mit organischen Anteilen versehenem Staub od. dgl. Rieselgut, insbesondere von Filterstaub aus -- Binder od. dgl. enthaltenden -- Gießereisanden. Zudem erfaßt die Erfindung eine Vorrichtung zur Durchführung dieses Verfahrens.

Filterstaub aus Trockenfilteranlagen von Gießereien wird seit Jahrzehnten mit dem Gießereischüttsand auf Deponien in einfacher Weise entsorgt. Mit Inkrafttreten des neuen Abfallgesetses muß nun Filterstaub auf Sonderdeponien gelagert werden, wenn er nicht einer anderen Verwendung zuführbar ist.

In Kenntnis dieses Standes der Entsorgung hat sich der Erfinder das Ziel gesetzt, die Entsorgung von Staub od. dgl. Rieselgut der eingangs erwähnten Art zu verbessern.

Zur Lösung dieser Aufgabe führt, daß der Staub in einen fluidisierbaren Wärmeträger aus feuerfestem Werkstoff eingebracht, aufgeheizt und verbrannt wird, wobei dieser Wärmeträger bevorzugt zur Aufnahme des Staubes vorgewärmt wird; man nützt die Gegebenheit aus, daß Filterstaub zumeist eine Anreicherung energiereicher, organischer -- also verbrennbarer -- Schadstoffe enthält und führt erfindungsgemäß eine Inertisierung auf thermischem Wege durch. Zwar sind sogenannte Wirbelbettfeuerungen als effektive Verbrennungsmöglichkeit bekannt, diese sind aber zum Verbrennen von Stäuben zum Zwecke einer Inertisierung nicht geeignet; durch die geringen und unterschiedlichen Sinkgeschwindigkeiten der einzelnen Staubpartikel konnte bisher eine definierte Verweilzeit des Staubes, die zu einer Inertisierung erforderlich ist, bei hoher Temperatur nicht sichergestellt werden.

Man bringt in Vollzug des erfindungsgemäßen Verfahrens den Staub bevorzugt im unteren Wärmeträgerbereich ein und entnimmt die Startenergie einer dort vorgesehenen Wärmequelle, die insbesondere aus elektrischen Heizstäben bestehen kann; aber auch durch Gas, Öl, Dampf od. dgl. erwärmte Heizvorrichtungen -- insbesondere in Stab- oder Rohrform -- können eingesetzt werden.

Nach einem weiteren Merkmal der Erfindung erfolgt in jenem feuerfesten, fluidisierbaren und erhitzten Wärmeträger eine Temperaturerhöhung des eingeleiteten Staubes auf Verbrennungstemperatur, wobei der Wärmeträger eine -- gegenüber der des Staubes -- höhere Sinkgeschwindigkeit aufweist.

Der Wärmeträger wirkt also als thermische Masse, die einerseits den Staub schnell auf Zündtemperatur erwärmt, die aber anderseits verhindert, daß dieser Staub zu schnell nach oben steigt. Der Wärmeträger wird durch eine pulsierend eingeleitete Fluidisierungsluft umgewälzt und weiter von einem -- von der zum Verbrennen der organischen Stoffe des Staubes abhängigen -- Luftstrom durchströmt. Die Verweilzeit des Staubes wird durch die Höhe des Schüttgutbettes des Wärmeträgermaterials sowie durch die pulsierend eingeleitete Fluidisierungsluft gesteuert. Sie wird so gewählt, daß der Staub vollständig frei von verbrennbaren Stoffen wird.

Nach dem Erreichen der Verbrenninngstemperatur in einer Startphase wird die Wärmeabgabe der -- vorzugsweise elektrischen -- Heizung vermindert oder je nach Energiegehalt des zu behandelnden Staubes zumindest teilweise abgeschaltet. Die Verbrennung erfolgt dann weitgehend oder ganz autark. Die Verweilzeit des Staubes im Wärmeträger wird vorteilhafterweise durch die Staubzuführung und/oder durch Fluidisierluft bestimmt, welche die zum Fluidisieren notwendige stetige Fluidisierluft überlagert. Außerdem soll die Strömungsgeschwindigkeit oberhalb der Wärmeträgerschüttung so gesteuert werden, daß sie größer ist als die Sinkgeschwindigkeit des Staubes; hierdurch wird der Staub ausgetragen.

Eine für dieses Verfahren zum thermischen Inertisieren des Staubes und zur Beseitigung seiner brennbaren Anteile geeignete Vorrichtung zeichnet sich dadurch aus, daß in einer Brennkammer eines Ofens auf einem Fluidisierboden ein Schüttgutbett aus einem fluidisierbaren, feuerfesten Werkstoff als Wärmeträger angeordnet ist und in diesem eine Heizeinrichtung sowie über dieser wenigstens eine Eintragseinrichtung für Staub vorgesehen sind. Bevorzugt verläuft oberhalb des Fluidisierbodens wenigstens ein Heizstab, der/die mit der Eintragseinrichtung in geringem Abstand über dem Fluidisierboden vorgesehen ist/sind. Nach einem weiteren Merkmal der Erfindung ist im Kopfbereich des Schüttgutbettes zumindest eine Luftzufuhr angebracht, welche in erwähnter Weise die Strömungsgeschwindigkeit zu regulieren hilft. Ebenso kann im Kopfbereich des Wärmeträgers oder Schüttgutbettes ein Auslaß für Staubteilchen hoher Sinkgeschwindigkeit vorhanden sein.

An die Brennkammer schließt ein durch Umlenkflächen od. dgl. Einbauten bestimmter Strömungsweg -- gegebenenfalls ein mäanderartiger Rauchgaszug -- an, dem zumindest ein Abscheider, insbesondere ein Zyklon folgt; in diesem werden die unbrennbaren Staubanteile abgetrennt; die von ihnen befreiten Gase gelangen dann in einen rekuperativen Wärmetauscher, der Teil der Fluidstromzufuhr ist und diesen vorwärmt. Der Staubdurchsatz kann dem Energieinhalt der Stäube entsprechend geregelt werden. Bei sehr energiereichen Stäuben kann der Rekuperator umfahren werden.

Weitere Ausgestaltungen der Erfindung sind den Unteransprüchen zu entnehmen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in

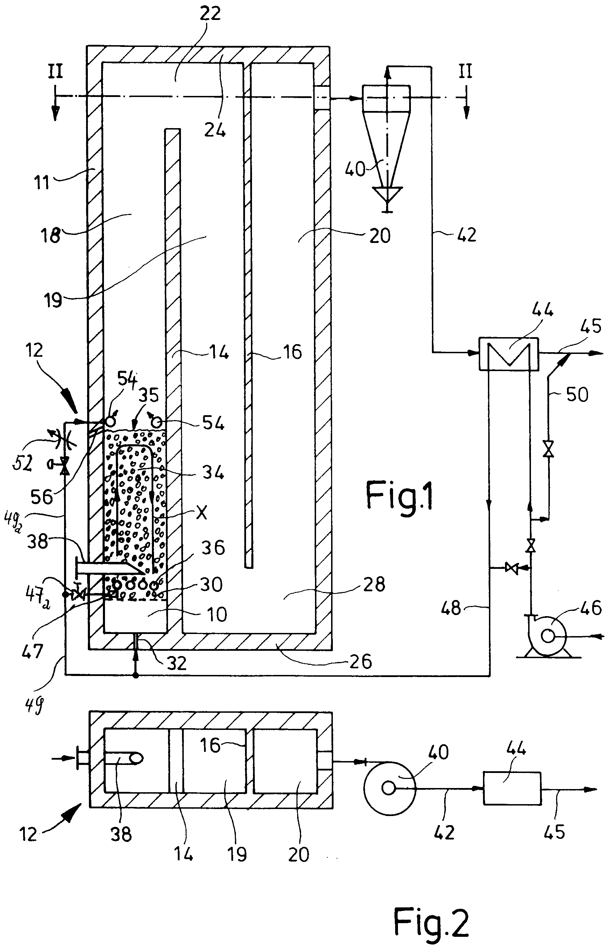

Fig. 1: einen Längsschnitt durch einen Ofen mit diesem nachgeordneten Austragseinrichtungen;

Fig. 2: einen Schnitt durch den Ofen nach Linie II - II in Fig. 1.

Das Innere 10 eines Ofens 12 ist durch Zwischenwände 14,16 in einen Ofenraum mit darüberliegender Rauchgaskammer 18 sowie zwei an diese anschließende weitere Rauchgaskammern 19,20 unterteilt; die den Ofenraum begrenzende Zwischenwand 14 endet unter Bildung eines oberen Rauchgasdurchlasses 22 in Abstand zu einem Ofendeckel 24, die andere Zwischenwand 16 reicht von letzterem bis zu einem -- mit einem Ofenboden 26 gebildeten -- unteren Rauchgasdurchlaß 28.

Den Ofenraum durchspannt ein poröser, bevorzugt gitterartiger Fluidisierboden 30, unter dem sich eine Luftzufuhr 32 und auf dem sich ein Schüttgutbett aus einem feuerfesten, fluidisierbaren Wärmeträger 34 hoher Sinkgeschwindigkeit befinden. Letzterer wird oberhalb des Fluidisierbodens 30 von bei 36 angedeuteten -- bevorzugt elektrischen --Heizstäben durchsetzt.

Eine Einblasdüse 38 erstreckt sich durch eine Außenwand 11 des Ofens 12 über wenigstens einen Teil der Heizstäbe 36; durch diese Einblasdüse 38 wird in das Schüttgutbett des Wärmeträgers 34 zu inertisierender Staub eingeführt.

Um eine definierte Verweilzeit der entstehenden Rauchgase im Ofen 12 zu gewährleisten, sind in diesem die drei hintereinandergeschalteten Rauchgaskammern 18,19,20 vorgesehen, die im dargestellten Beispiel zur Verminderung von Bauhöhe nebeneinander verlaufen.

Der letzten Rauchgaskammer 20 ist ein Zyklon 40 nachgeordnet in dem im Rauchgas befindlicher Staub weitgehend abgeschieden wird. Auf der Reingasseite des Zyklons 40 folgt nach einer Leitung 42 ein Re-kuperator 44, gegebenenfalls unter Zwischenschaltung einer Nachverbrennungseinrichtung für chemische Schadstoffe wie Dioxine od. dgl.

Durch den Rekuperator 44 ist -- von einem Ventilator 46 kommende, für den Ofen 12 erforderliche -- Verbrennungsluft in einer Leitung 48 hindurchgeführt. Dieser Ventilator 46 liefert nötigenfalls auch durch Zweigleitung 50 Kühlluft für den Ausgang 45 des Rekuperators 44.

Zum Anfahren der Anlage werden die Heizstäbe 36 bei stark reduzierter Fludisierluft auf etwa 800 bis 1000° C erhitzt. Der dadurch im unteren Bereich erwärmte Wärmeträger 34 sowie die erwärmte Luft übertragen die Temperatur durch die Fluidisierung und die dadurch erzeugte Umwälzbewegung auf das gesamte Schüttgutbett des Wärmeträgers 34, bis dieser seine Solltemperatur von 750 bis 800° C erreicht hat. Nunmehr wird mit organischen Stoffen belasteter, zu inertisierender Staub geregelt in den Wärmeträger 34 eingeblasen und darin erhitzt.

Die über eine Luftzuführeinrichtung 32 der Rekuperatorleitung 48 unterhalb des Fluidisierbodens 30 in das Ofeninnere 10 eingebrachte stetige Menge an Fluidisierluft wird in Abhängigkeit vom CO-Wert des Rauchgases gesteuert. Die pulsierende Fluidisierluft gelangt im gewählten Ausführungsbeispiel durch die Rekuperatorleitung 48 über einen Abzweig 49 zu einer Luftdüse 47 der ein Pulsventil $47_a$ vorgeschaltet ist.

Der durch den Luftstrom der seitlichen Luftdüse 47 im Uhrzeigersinn (Pfeil x) bewegte Wärmeträger 34 gibt durch die große Oberfläche seine Wärme an den Staub ab, der bei Erreichen der Zündtemperatur verbrennt und seinerseits seine Verbrennungsenergle -- besonders im Kopfbereich des Schüttgutbettes -- auf jenen Wärmeträger 34 zurück überträgt.

Nach der Anfahr- oder Startphase kann die Heizung, im gewählten Beispiel sind dies die elektrischen Heizstäbe 34, je nach Energiegehalt des Staubes vermindert oder ausgeschaltet werden, und es läuft eine weitgehend autarke Verbrennung.

Oberhalb des Schüttungsspiegels 35 des Wärmeträgers 34 mündet ein -- bevorzugt mit einer nicht dargestellten Schleuseneinrichtung ausgestatteter -- Auslaß 56 für inertisierte Teilchen hoher Sinkgeschwindigkeit, auch ist dort die Strömungsgeschwindigkeit wahlweise durch Zuschalten einer Frischluftzufuhr bei 54 zu erhöhen, um den Staubaustrag zu unterstützen. In einer der Frischluftzufuhr 54 vorgeordneten Leitung $49_a$ findet sich ein Mengenregelventil 52.

Das Ofeninnere 10 und die Rauchgaskammern 18 bis 20 sind aus Sicherheits- und Energieeinspargründen isoliert, was der Übersichtlichkeit wegen in der Zeichnung nicht weiter dargestellt wurde.

**Patentansprüche**

1. Verfahren zum Behandeln von mit organischen Anteilen versehenem Staub od. dgl., insbesondere vom Filterstaub aus Binder enthaltenden Gießereisanden,

   dadurch gekennzeichnet,

   daß der Staub in einen fluidisierbaren Wärmeträger aus feuerfestem Werkstoff eingebracht, aufgeheizt und anschließend verbrannt wird.

2. Verfahren nach Anspruch 1, dadurch gekennzeichnet, daß der Wärmeträger zur Aufnahme des Staubes vorgewärmt wird.

3. Verfahren nach Anspruche 1 oder 2, dadurch gekennzeichnet, daß nach Erreichen der Verbrennungstemperatur in einer Startphase die Heizung angepaßt oder abgeschaltet wird.

4. Verfahren nach einem der Ansprüche 1 bis 3, dadurch gekennzeichnet, daß der Wärmeträger durch Heizstäbe aufgeheizt wird und/oder, daß der Staub durch den Wärmeträger aufgeheizt wird.

5. Verfahren nach einem der Ansprüche 1 bis 4, dadurch gekennzeichnet, daß die Verbrennungsenergie des aufgeheizten Staubes in den Wärmeträger zu dessen Erwärmung rückgeführt wird.

6. Verfahren nach wenigstens einem der Ansprüche 1 bis 5, dadurch gekennzeichnet, daß der Wärmeträger durch die Fluidisierung umgewälzt wird.

7. Verfahren nach wenigstens einem der Ansprüche 1 bis 6, gekennzeichnet durch einen feuerfesten Wärmeträger mit einer gegenüber dem Staub höheren Sinkgeschwindigkeit.

8. Verfahren nach wenigstens einem der Ansprüche 1 bis 7, dadurch gekennzeichnet, daß der Staub in den unteren Bereich des Wärmeträgers eingebracht, insbesondere eingeblasen, wird und/oder, daß die Verweilzeit des Staubes im Wärmeträger durch dessen Umwälzgeschwindigkeit gesteuert wird.

9. Verfahren nach wenigstens einem der Ansprüche 1 bis 8, dadurch gekennzeichnet, daß die Verweilzeit des Staubes im Wärmeträger durch Fluidisierluft gesteuert wird, welche die stetige Fluidisierluft überlagert, wobei gegebenfalls die überlagernde Fluidisierluft pulsierend eingesetzt wird.

10. Verfahren nach wenigstens einem der Ansprüche 1 bis 9, dadurch gekennzeichnet, daß die Rauchgasgeschwindigkeit so gesteuert wird, daß sie größer als die Sinkgeschwindigkeit des Staubes ist.

11. Vorrichtung zur Durchführung des Verfahrens nach wenigstens einem der Ansprüche 1 bis 10, dadurch gekennzeichnet, daß in einer Brennkammer eines Ofens (12) auf einem Fluidisierboden (30) ein Schüttgutbett aus einem fluidisierbaren, feuerfesten Werkstoff als Wärmeträger (34) angeordnet ist und in diesem eine Heizeinrichtung (36) sowie wenigstens eine Eintragseinrichtung (38) für Staub vorgesehen sind.

12. Vorrichtung nach Anspruch 11, dadurch gekennzeichnet, daß oberhalb des Fluidisierbodens (30) wenigstens ein Heizstab (36) verläuft und/oder, daß die Heizeinrichtung ein elektrischer Heizstab (36) ist.

13. Vorrichtung nach Anspruch 11 oder 12, dadurch gekennzeichnet, daß die Heizstäbe (36) in geringem Abstand zum Fluidisierboden (30) verlaufen und über diesen die Eintragseinrichtung (38) angeordnet ist.

14. Vorrichtung nach wenigstens einem der Ansprüche 11 bis 13, dadurch gekennzeichnet, daß im Kopfbereich des Schüttgutbettes des Wärmeträgers (34) zumindest eine Frischluftzufuhr (54) vorgesehen ist und/oder, daß im Kopfbereich des Schüttgutbettes des Wärmeträgers (34) ein Auslaß (56) für inertisierte Schüttgutpartikel höherer Sinkgeschwindigkeit vorgesehen ist.

15. Vorrichtung nach wenigstens einem der Ansprüche 11 bis 14, dadurch gekennzeichnet, daß die Brennkammer ein durch Einbauten (14,16) bestimmter Strömungsweg, insbesondere ein gegebenenfalls mäanderartiger Rauchgaszug (18,19,20), mit zumindest einem Abscheider, insbesondere einem Zyklon (40), verbindet, dem gegebenenfalls ein Wärmetauscher (44) nachgeordnet und dieser Teil einer Luftzufuhr (46,48,32) ist, wobei gegebenenfalls dem Zyklon (40) ein Nachverbrenner nachgeordnet ist.

16. Vorrichtung nach wenigstens einem der Ansprüche 11 bis 15, dadurch gekennzeichnet, daß dem unteren Bereich des Schüttgutbettes des Wärmeträgers (34) eine Luftzuführeinrichtung (47) außermittig zugeordnet ist, die gegebenenfalls nahe einer Wand (11 bzw. 14) der Brennkammer angeordnet ist.

17. Vorrichtung nach Anspruch 15 oder 16, dadurch gekennzeichnet, daß die Luftzuführeinrichtungen (47) pulsierend mit Luft beaufschlagt ist und/oder, daß der Luftzuführeinrichtung (47) wenigstens ein Pulsventil (47$_a$) od. dgl. Pulsationserzeuger vorgeordnet ist.

Fig.1

Fig.2